# EUROPÄISCHE PATENTSCHRIFT

(11) **EP 0 586 339 B1**
(45) Veröffentlichungstag und Bekanntmachung des Hinweises auf die Patenterteilung: **22.09.1999**
(21) Anmeldenummer: 93810584.8
(22) Anmeldetag: 18.08.1993
(51) Int. Cl.: C09B 62/83, C09B 62/453, C09B 62/59, D06P 3/24

(54) **Azofarbstoffe, Verfahren zu deren Herstellung und deren Verwendung**
Azo dyes, process for their preparation and the use thereof
Colorants azoiques, procédé pour leur préparation et leur utilisation

(30) Priorität: 27.08.1992 CH 266392
(43) Veröffentlichungstag der Anmeldung: 09.03.1994
(73) Patentinhaber: Ciba Specialty Chemicals Holding Inc., 4057 Basel (CH)
(72) Erfinder: Schaetzer, Jürgen, Dr., D-79618 Rheinfelden (DE); Posey, James C., Dr., CH-4053 Basel (CH)

(56) Entgegenhaltungen:
- EP-A- 0 524 147
- EP-A- 0 524 148
- FR-A- 2 181 062
- FR-A- 2 224 526

## Beschreibung

Die vorliegende Erfindung betrifft neue Azofarbstoffe, Verfahren zu deren Herstellung und Verwendung dieser Farbstoffe zum Färben und Bedrucken von Fasermaterialien, insbesondere textilen Fasermaterialien.

Gegenstand der vorliegenden Erfindung sind Azofarbstoffe der Formel 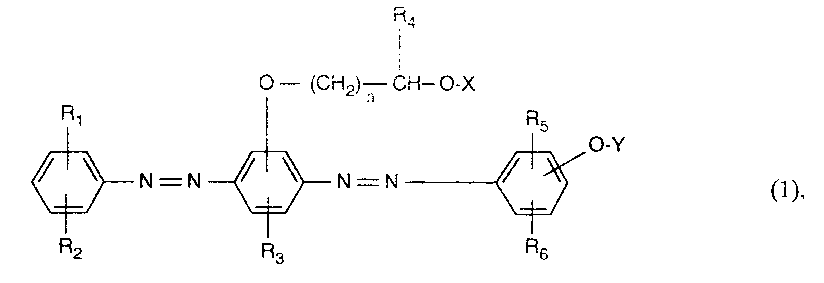 worin
R₁ Sulfo ist,
R₂ und R₅ unabhängig voneinander Wasserstoff, C₁-C₄-Alkyl, C₁-C₄-Alkoxy, Halogen, C₂-C₄-Alkanoylamino oder ein Rest der Formel 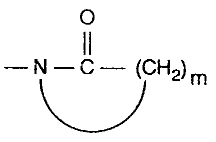 sind,
m die Zahl 3, 4 oder 5 ist,
R₃ und R₆ Wasserstoff, C₁-C₄-Alkyl, C₁-C₄-Alkoxy, C₂-C₄-Alkanoylamino oder Halogen R₄ Wasserstoff oder C₁-C₄-Alkyl,
X Wasserstoff, C₁-C₄-Alkyl oder C₂-C₄-Hydroxyalkyl,
Y C₁-C₈-Alkyl, im Alkylteil durch die Gruppe -O-, 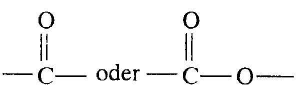 unterbrochenes C₂-C₈-Alkyl, oder C₃-C₈-Alkenyl ist und
n die Zahl 1, 2, 3 oder 4 ist;
mit der Massgabe, dass im Azofarbstoff der Formel (1) mindestens einer der Substituenten R₂, R₅ und R₆ C₂-C₄-Alkanoylamino oder ein Rest der Formel 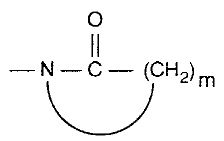 ist, wobei
m die oben angegebenen Bedeutungen hat; oder
X C₁-C₄-Alkyl oder C₂-C₄-Hydroxyalkyl ist; oder
Y im Alkylteil durch die Gruppe -O-, 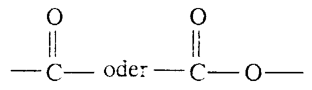 unterbrochenes C₂-C₈-Alkyl, oder C₃-C₈-Alkenyl ist.

Aus der FR-A-2,181,062 sind Disazofarbstoffe bekannt, die sich von den erfindungsgemässen Azofarbstoffen einerseits hinsichtlich des Substituenten X und andererseits dadurch unterscheiden, dass sie keine Sulfonsäuregruppe am Benzolring der Diazokomponente enthalten.

Als C₁-C₄-Alkyl kommt für R₂, R₃, R₄, R₅, R₆ und X Methyl, Äthyl, Propyl, Isopropyl, Butyl, sek.-Butyl, tert.-Butyl oder Isobutyl, insbesondere Methyl, in Betracht.

Als C₁-C₄-Alkoxy kommt für R₂, R₃, R₅ und R₆ z.B. Methoxy, Äthoxy, Propoxy, Isopropoxy, Butoxy oder Isobutoxy, insbesondere Methoxy, in Betracht.

Als Halogen kommt für R₂, R₃, R₅ und R₆ Fluor, Chlor oder Brom, insbesondere Chlor, in Betracht.

Als C₂-C₄-Alkanoylamino kommt für R₂, R₃, R₅ und R₆ insbesondere Acetylamino oder Propionylamino, vorzugsweise Acetylamino, in Betracht.

Für m ist die Zahl 3 oder 4, insbesondere die Zahl 3, bevorzugt.

Bei dem Rest X als C₂-C₄-Hydroxyalkyl handelt es sich um durch Hydroxy substituiertes Äthyl, Propyl, Isopropyl, Butyl, sek.-Butyl, tert.-Butyl oder Isobutyl.

Der Rest Y als C₁-C₈-Alkyl kann geradkettig oder verzweigt sein. Als Beispiele seien Methyl, Äthyl, Propyl, Isopropyl, Butyl, sek.-Butyl, tert.-Butyl, Isobutyl, sowie geradkettiges oder verzweigtes Pentyl, Hexyl, Heptyl oder Octyl genannt. Bevorzugt handelt es sich bei dem Rest Y in der Bedeutung als C₁-C₈-Alkyl um C₁-C₄-Alkyl.

Der Rest Y als im Alkylteil durch die Gruppe -O-, 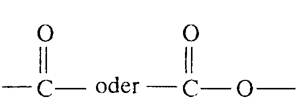 unterbrochenes C₂-C₈-Alkyl kann geradkettige oder verzweigte Alkylreste enthalten. Vorzugsweise handelt es sich hierbei um durch die genannten Gruppen unterbrochenes C₂-C₄-Alkyl. Als Beispie!e seien genannt:
-CH₂CH₂-O-CH₂CH₃, -CH₂CH₂-O-CH₃,

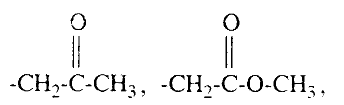

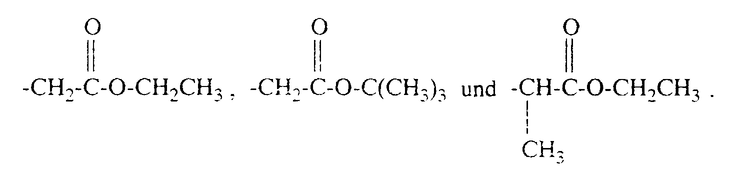

Y in der Bedeutung als C₃-C₈-Alkenyl ist vorzugsweise C₃-C₄-Alkenyl. Als Beispiele seien -CH₂-CH=CH₂, -CH₂-CH=CH-CH₃ und -CH(CH₃)-CH=CH₂ genannt.

Bei dem Rest R₃ handelt es sich bevorzugt um Wasserstoff oder C₁-C₄-Alkyl und vorzugsweise um Wasserstoff oder Methyl.

Der Rest R₄ ist bevorzugt Wasserstoff.

Der Rest R₆ ist bevorzugt Wasserstoff.

X ist bevorzugt Wasserstoff oder C₁-C₄-Alkyl.

Für n ist die Zahl 1 oder 2, insbesondere die Zahl 1, bevorzugt.

Besonders bevorzugt sind Azofarbstoffe der Formel (1), worin R₂ und R₅ unabhängig voneinander Wasserstoff, C₁-C₄-Alkyl, C₁-C₄-Alkoxy, Halogen, C₂-C₄-Alkanoylamino oder ein Rest der Formel 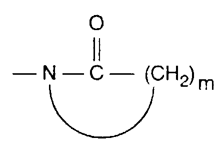 sind, m die Zahl 3, 4 oder 5 ist und R₆ Wasserstoff bedeutet.

Ganz besonders bevorzugt sind Azofarbstoffe der Formel (1), worin R₂ und R₅ unabhängig voneinander Wasserstoff, C₁-C₄-Alkyl, C₁-C₄-Alkoxy, Halogen, C₂-C₄-Alkanoylamino oder ein Rest der Formel 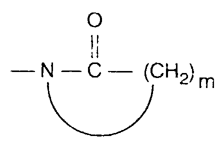 sind, m die Zahl 3, 4 oder 5, R₃ Wasserstoff oder C₁-C₄-Alkyl ist, R₄ und R₆ jeweils Wasserstoff bedeuten und für X, Y und n die oben angegebenen Bedeutungen und Bevorzugungen gelten; mit der Massgabe, dass im Azofarbstoff der Formel (1) mindestens einer der Substituenten R₂ und R₅ C₂-C₄-Alkanoylamino oder ein Rest der Formel 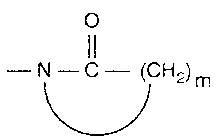 ist, wobei
m die oben angegebenen Bedeutungen hat; oder
X C₁-C₄-Alkyl oder C₂-C₄-Hydroxyalkyl ist; oder
Y im Alkylteil durch die Gruppe -O-, 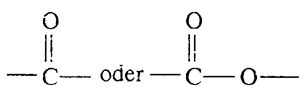 unterbrochenes C₂-C₈-Alkyl, oder C₃-C₈-Alkenyl ist.

Eine Gruppe von interessanten Azofarbstoffen der Formel (1) umfasst solche, worin n die Zahl 2, 3 oder 4, insbesondere die Zahl 2, ist, und für R₁, R₂, R₃, R₄, R₅, R₆, X und Y die oben angegebenen Bedeutungen und Bevorzugungen gelten.

Eine weitere Gruppe von interessanten Azofarbstoffen der Formel (1) umfasst solche, worin X C₁-C₄-Alkyl oder C₂-C₄-Hydroxyalkyl und insbesondere C₁-C₄-Alkyl ist. Hierbei gelten für R₁, R₂, R₃, R₄, R₅, R₆ und Y die oben angegebenen Bedeutungen und Bevorzugungen, und n ist die Zahl 1, 2, 3 oder 4, insbesondere die Zahl 1 oder 2 und vorzugsweise die Zahl 1.

Eine Gruppe von besonders interessanten Azofarbstoffen der Formel (1) umfasst solche, worin Y C₃-C₈-Alkyl, im Alkylteil durch die Gruppe -O-, 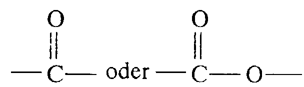 unterbrochenes C₂-C₈-Alkyl, oder C₃-C₈-Alkenyl ist, wobei für R₁, R₂, R₃, R₄, R₅ und R₆ die oben angegebenen Bedeutungen und Bevorzugungen gelten, n die Zahl 1, 2, 3 oder 4, insbesondere die Zahl 1 oder und vorzugsweise die Zahl 1 ist und X Wasserstoff, C₁-C₄-Alkyl oder C₂-C₄-Hydroxyalkyl und insbesondere Wasserstoff oder C₁-C₄-Alkyl ist. Für diese Gruppe besonders interessanter Azofarbstoffe ist die Bedeutung von Y als im Alkylteil durch die Gruppe -O-, 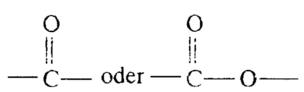 unterbrochenes C₂-C₈-Alkyl, oder C₃-C₈-Alkenyl und besonders C₃-C₈-Alkenyl bevorzugt.

Ganz besonders interessant sind Azofarbstoffe der Formel (1), worin einer der Reste R₂ und R₅ C₂-C₄-Alkanoylamino oder ein Rest der Formel 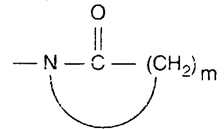 ist, m die Zahl 3, 4 oder 5 bedeutet, für R₁, R₃, R₄, R₆ und den anderen Rest R₅ oder R₂ die oben angegebenen Bedeutungen und Bevorzugungen gelten, n die Zahl 1, 2, 3 oder 4, insbesondere die Zahl 1 oder 2 und vorzugsweise die Zahl 1 ist, X Wasserstoff, C₁-C₄-Alkyl oder C₂-C₄-Hydroxyalkyl und insbesondere Wasserstoff oder C₁-C₄-Alkyl ist und Y C₁-C₈-Alkyl, im Alkylteil durch die Gruppe -O-, 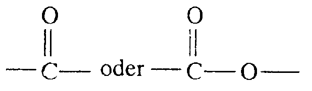 unterbrochenes C₂-C₈-Alkyl, oder C₃-C₈-Alkenyl ist.

Besonders wichtig sind Azofarbstoffe der Formel 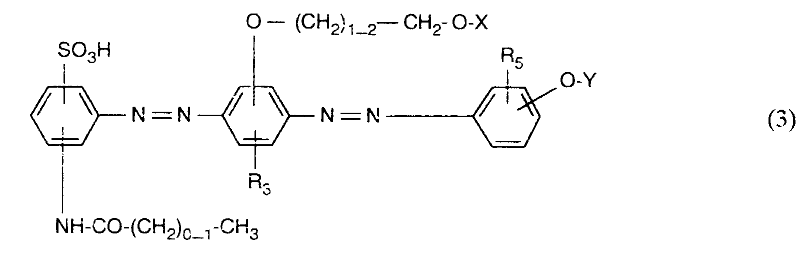 oder 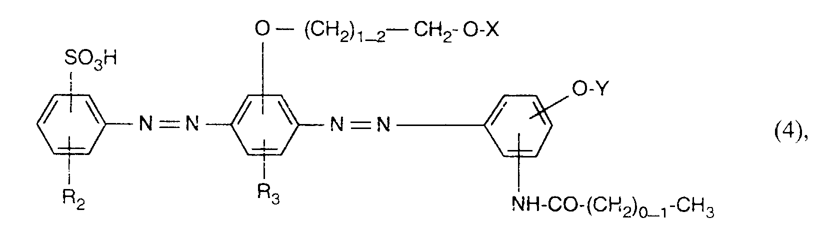 worin R₃ Wasserstoff oder C₁-C₄-Alkyl ist, R₂ und R₅ Wasserstoff, C₁-C₄-Alkyl, C₁-C₄-Alkoxy, Halogen oder ein Rest der Formel -NH-CO-(CH₂)₀₋₁-CH₃ sind und X und Y die für die ganz besonders interessanten Azofarbstoffe angegebenen Bedeutungen und Bevorzugungen haben.

Gegenstand der Erfindung ist ferner ein Verfahren zur Herstellung der Azofarbstoffe der Formel (1), welches dadurch gekennzeichnet ist, dass man ein Amin der Formel 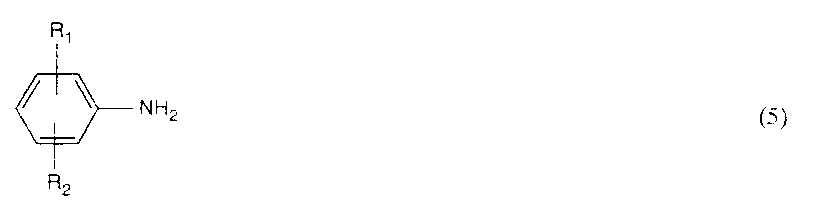 diazotiert, auf eine Kupplungskomponente der Formel 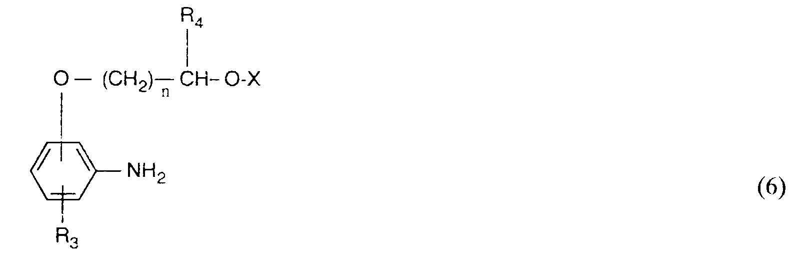 kuppelt, das Reaktionsprodukt der Formel 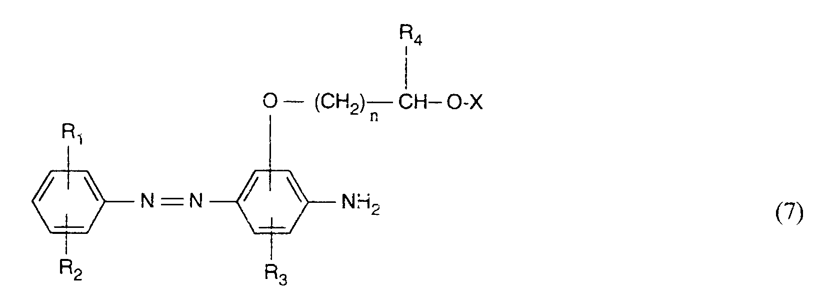 diazotiert und auf eine Kupplungskomponente der Formel 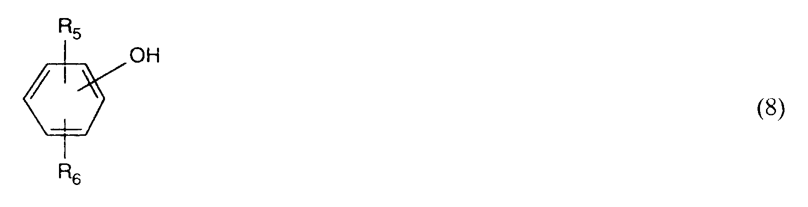 kuppelt, oder eine Verbindung der Formel (7) diazotiert und auf eine Verbindung der Formel (8) kuppelt und anschliessend den erhaltenen Farbstoff mit einer den Rest -Y einführenden Verbindung umsetzt, wobei R₁, R₂, R₃, R₄, R₅, R₆, X, Y und n die unter Formel (1) angegebenen Bedeutungen haben.

Die Diazotierung der Verbindungen der Formeln (5) und (7) erfolgt jeweils in an sich bekannter Weise, z.B. mit einem Nitrit, z.B. mit einem Alkalimetallnitrit wie Natriumnitrit, in einem mineraisäuren Medium, z.B. in einem salzsauren Medium, bei Temperaturen von beispielsweise -5 bis 30°C und vorzugsweise bei 0 bis 10°C.

Die Kupplung auf die Kupplungskomponenten der Formel (6) und (8) erfolgt jeweils in an sich bekannter Weise, bei sauren, neutralen bis schwach alkalischen pH-Werten und Temperaturen von beispielsweise -5 bis 30°C, vorzugsweise 0 bis 15°C.

Zur Einführung des Restes -Y können beispielsweise Verbindungen der Formel Z-Y verwendet werden, worin Z Halogen, wie Chlor, Brom oder Jod, Alkylsulfonat oder p-Toluolsulfonat bedeutet. Vorzugsweise verwendet man zur Einführung des Restes -Y Verbindungen der Formel Z-Y, worin Z Halogen, insbesondere Brom, bedeutet. Handelt es sich bei dem Rest -Y um Methyl, so erfolgt die Einführung dieses Restes vorzugsweise mit Dimethylmethanphosphonat oder Dimethylsulfat. Handelt es sich bei dem Rest -Y um Aethyl, so erfolgt die Einführung dieses Restes vorzugsweise mit Diäthylsulfat.

Die Umsetzung mit Verbindungen der oben genannten Formel Z-Y kann generell in dipolaren aprotischen Lösungsmitteln, wie z.B. Dimethylformamid, Dimethylsulfoxid, N-Methylpyrrolidon oder Dimethylacetamid, in Gegenwart einer Base, wie beispielsweise einem Alkalicarbonat oder Alkalihydroxid, z.B. Natriumcarbonat, Kaliumcarbonat oder Natriumhydroxid, bei einer Temperatur von z.B. 60 bis 100°C, insbesondere 60 bis 80°C, erfolgen.

Die Umsetzung mit Dimethylsulfat, Diäthylsulfat, Dimethylmethanphosphonat oder Verbindungen der Formel Z-Y, worin Y keine Esterfunktion enthält, erfolgt in der Regel in wässrigem Medium, in Gegenwart einer Base, wie beispielsweise einem Alkalicarbonat oder Alkalihydroxid, z.B. Natriumcarbonat, Kaliumcarbonat oder Natriumhydroxid, bei einer Temperatur von z.B. 40 bis 80°C; insbesondere 50 bis 70°C, und einem pH-Wert von z.B. 8 bis 12, insbesondere 10 bis 12.

In dem erfindungsgemässen Verfahren zur Herstellung der Azofarbstoffe der Formel (1) gelten für die Substituenten der Verbindungen der Formeln (5), (6), (7) und (8) die oben angegebenen Bevorzugungen.

Die Verbindungen der Formeln (5), (6) und (8) sind bekannt oder können in Analogie zu bekannten Verbindungen hergestellt werden.

Die Azofarbstoffe der Formel (1) liegen entweder in der Form ihrer freien Säure oder vorzugsweise als deren Salze vor.

Als Salze kommen beispielsweise die Alkali- oder Ammmoniumsalze oder die Salze eines organischen Amins in Betracht.

Als Beispiel seien die Natrium-, Lithium-, Kalium- oder Ammoniumsalze oder das Salz des Mono-, Di- oder Triäthanolamins genannt.

Die erfindungsgemässen Azofarbstoffe der Formel (1) eignen sich nach an sich bekannten Methoden zum Färben und Bedrucken, insbesondere von stickstoffhaltigen oder hydroxygruppenhaltigen Fasermaterialien, wie z.B. textilen Fasermaterialien aus Cellulose, Seide und insbesondere Wolle und synthetischen Polyamiden. Bevorzugt ist das Färben oder Bedrucken von natürlichen oder synthetischen Polyamidfasermaterialien. Die erfindungsgemässen Azofarbstoffe der Formel (1) können in aligemein üblicher, gegebenenfalls zuvor aufbereiteter Form zum Färben oder Bedrucken verwendet werden. Man erhält egale Färbungen in gelben bis orangen Tönen mit guten Allgemeinechtheiten, insbesondere guter Reib-, Nass-, Nassreib- und Lichtechtheit. Ferner sind die erfindungsgemässen Farbstoffe gut wasserlöslich. Weiterhin sind die erfindungsgemässen Farbstoffe sehr gut mit anderen Farbstoffen kombinierbar. Das oben genannte Textilmaterial kann in den verschiedensten Verarbeitungsformen vorliegen, wie z.B. als Faser, Garn, Gewebe oder Gewirke.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Beispiel 1: 17,3 Teile Sulfanilsäure werden in 100 Tei!en Wasser suspendiert und langsam mit 5,4 Teilen Natriumcarbonat versetzt. Zu der so erhaltenen Lösung werden 7 Teile Natriumnitrit, gelöst in 26 Teilen Wasser, und 116 Teile Eis zugegeben. Anschliessend werden 21 Teile konzentrierter Salzsäure hinzugefügt und es wird bei einer Temperatur von 0 bis 5°C in üblicher Weise diazotiert. Nach zwei Stunden wird der Nitritüberschuss mit wenig Amidosulfonsäure entfernt. Das so bereitete Diazotierungsgemisch lässt man langsam in eine 0 bis 5°C kalte Lösung von 17 Teilen 2-(2-Amino-4-methylphenoxy)äthanol in 100 Teilen 2-normaler Salzsäure einfliessen. Durch Zugabe von festem Natriumcarbonat wird der pH bei einem Wert von ca. 6,5 gehalten. Nach zweistündigem Rühren bei einer Temperatur von 0 bis 5°C ist die Kupplung beendet. Mittels 4-normaler Salzsäure wird der pH-Wert auf ca. 4 gestellt und der resultierende Niederschlag wird abgesaugt, mit Wasser nachgewaschen und im Trockenschrank bei einer Temperatur von 80°C getrocknet. Man erhält 34 Teile eines Monoazofarbstoffes.

34 Teile des wie oben angegeben erhältlichen Monoazofarbstoffes werden in 800 Teilen Wasser bei einer Temperatur von 45°C unter Zusatz von wenig 30%-iger Natriumhydroxidlösung gelöst, wobei sich ein pH-Wert von 8 bis 9 einstellt. Diese Lösung wird unter Rühren mit 7 Teilen Natriumnitrit in 26 Teilen Wasser und 80 Teilen wässriger Naphthalin-1-sulfonsäurelösung (31%-ig) versetzt. Nach einer Stunde Rühren bei einer Temperatur von 45°C ist die Diazotierung beendet. Ueberschüssiges Nitrit wird rnit Amidosulfonsäure zerstört und das ausgefallene Diazoniumsalz wird abgesaugt. Die feuchte Paste des Diazoniumsalzes wird anschliessend langsam in eine 0°C kalte, schwach alkalische Lösung von 10 Teilen Phenol in 300 Teilen Wasser eingetragen. Nach mehrstündigem Rühren bei einer Temperatur von 0 bis 5°C und einem pH-Wert von ca. 8,5 ist die Kupplung beendet. Die dunkelrote Lösung wird mit insgesamt 600 Teilen 4-normaler Salzsäure versetzt und der Bisazofarbstoff wird abgesaugt. Man erhält nach Trocknung 37 Teile eines braunen Pulvers.

5 Teile des wie oben angegeben erhältlichen Bisazofarbstoffes werden in 150 Teilen Dimethylformamid gelöst und nach Zugabe von 5,5 Teilen fein gemahlenem Kaliumcarbonat auf eine Temperatur von 70°C erhitzt. Zu der braunen Lösung fügt man langsam 1,3 Teile Allylbromid zu. Nach ca. zwei Stunden ist die Verätherung beendet. Man lässt auf Raumtemperatur abkühlen, entfernt das Kaliumcarbonat mittels Filtration und dampft die resultierende orangefarbene Lösung bis zur Trockene ein. Der Rückstand wird mit Isopropanol behandelt, worauf sich ein feiner orangefarbener Niederschlag bildet. Nach Umkristallisation aus einem Aethanol/Wasser-Gemisch und Trocknung erhält man 4,2 Teile eines orangefarbenen Farbstoffes, der in Form der freien Säure der Verbindung der Formel 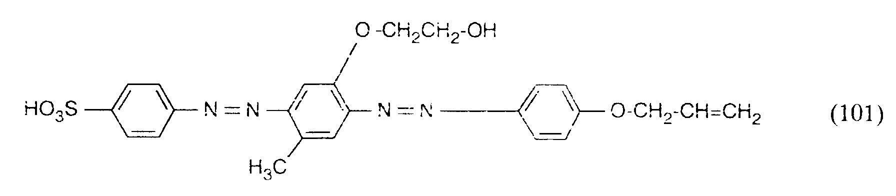 entspricht. Der Farbstoff der Formel (101) färbt natürliches und synthetisches Polyamidfasermaterial in orangen Farbtönen.

### Beispiele 2 bis 41: Analog zu den Angaben in Beispiel 1 können die in Form der freien Säure angegebenen Farbstoffe der Formel

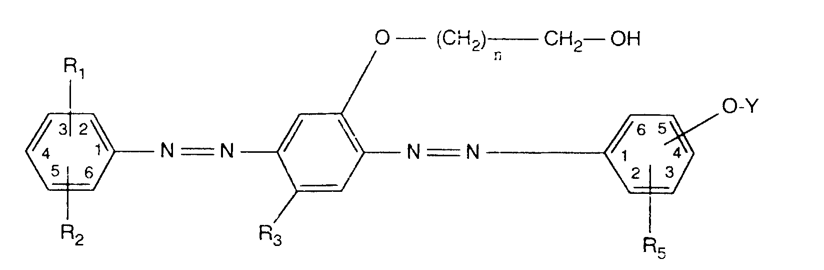

erhalten werden, worin R₁, R₂, R₃, R₅, -O-Y und n die in der folgenden Tabelle 1 angegebenen Bedeutungen haben. Zur Einführung des Restes -Y werden entsprechende Verbindungen der Formel Br-Y verwendet. Die in Tabelle 1 angegebenen Farbstoffe färben natürliches und synthetisches Polyamidfasermaterial in gelben bis orangen Farbtönen.

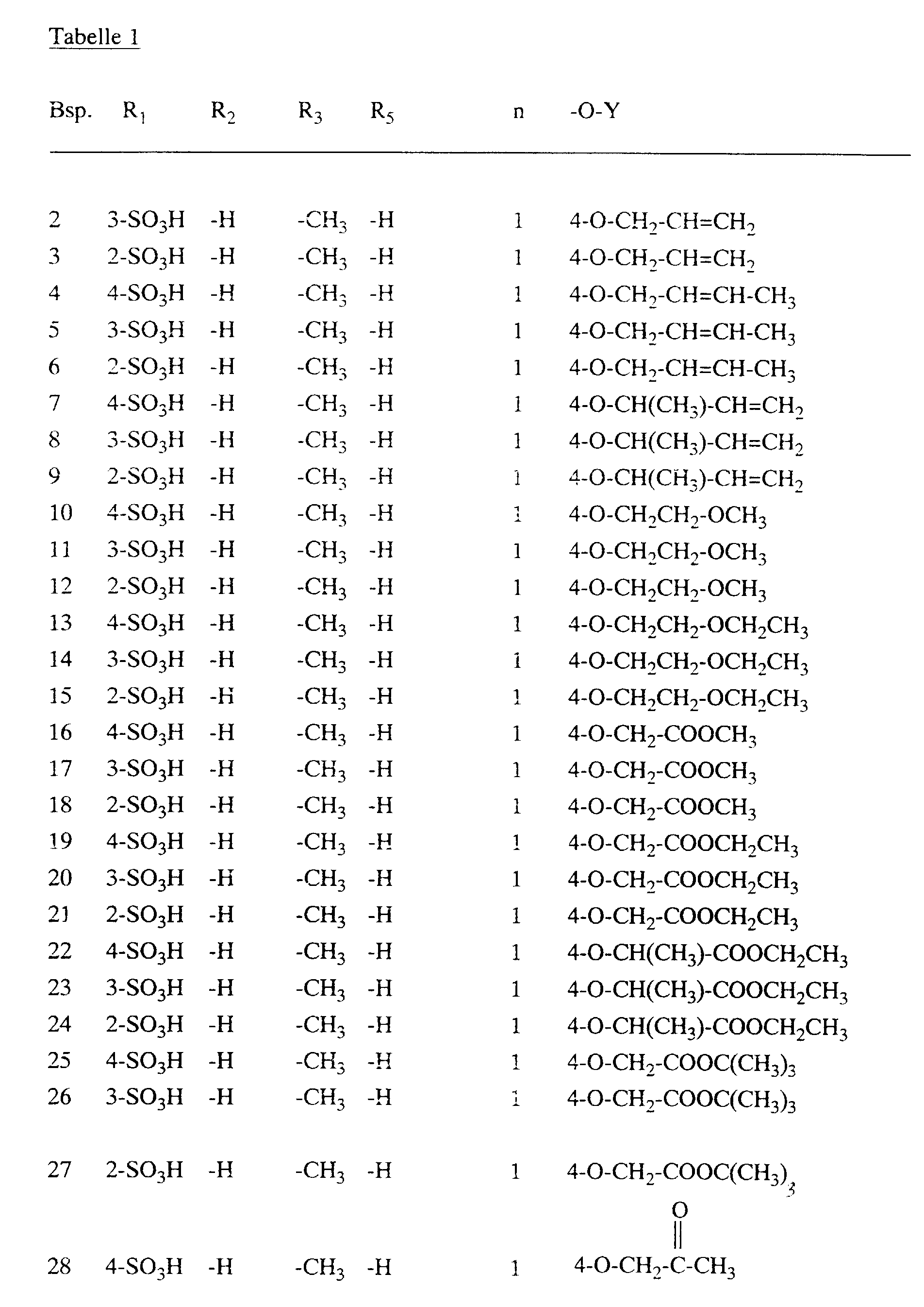

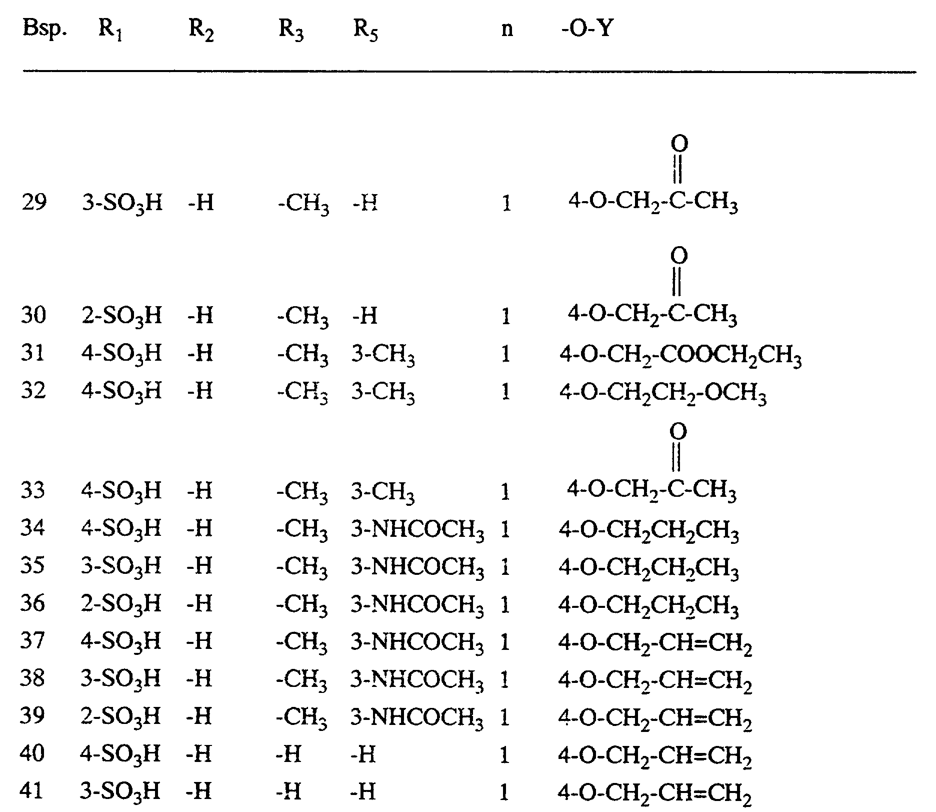

Beispiel 42: 17,3 Teile Sulfanilsäure werden in 100 Teilen Wasser suspendiert und langsam mit 5,4 Teilen Natriumcarbonat versetzt. Zu der so erhaltenen Lösung werden 7 Teile Natriumnitrit, gelöst in 26 Teilen Wasser, und 116 Teile Eis zugegeben. Anschliessend werden 21 Teile konzentrierter Salzsäure hinzugefügt und es wird bei einer Temperatur von 0 bis 5°C in üblicher Weise diazotiert. Nach zwei Stunden wird der Nitritüberschuss mit wenig Amidosulfonsäure entfernt. Das so bereitete Diazotierungsgemisch lässt man langsam in eine 0 bis 5°C kalte Lösung von 17 Teilen 2-(2-Amino-4-methylphenoxy)-äthyimethyläther in 100 Teilen 2-normaler Salzsäure einfliessen. Durch Zugabe von festem Natriumcarbonat wird der pH bei einem Wert von ca. 5 gehalten. Nach halbstündigem Rühren bei einer Temperatur von 0 bis 5°C und weiteren zwei Stunden bei Raumtemperatur ist die Kupplung beendet. Mittels 4-normaler Salzsäure wird der pH-Wert auf ca. 4,5 gestellt und der resultierende Niederschlag wird abgesaugt, mit 5%-iger Natriumchloridlösung nachgewaschen und im Trockenschrank bei einer Temperatur von 60°C getrocknet. Man erhält 35 Teile eines Monoazofarbstoffes.

36,5 Teile des wie oben angegeben erhältlichen Monoazofarbstoffes werden in 800 Teilen Wasser bei einer Temperatur von 45°C unter Zusatz von wenig 30%-iger Natriumhydroxidlösung gelöst, wobei sich ein pH-Wert von 8 bis 9 einstellt. Diese Lösung wird unter Rühren mit 7 Teilen Natriumnitrit in 26 Teilen Wasser und 80 Teilen wässriger Naphthalin-1-sulfonsäurelösung (31%-ig) versetzt. Nach einer Stunde Rühren bei einer Temperatur von 45°C ist die Diazotierung beendet. Ueberschüssiges Nitrit wird mit Amidosulfonsäure zerstört. Das Diazotierungsgemisch lässt man anschliessend langsam in eine 0°C kalte, schwach alkalische Lösung von 10 Teilen Phenol in 500 Teilen Wasser einfliessen. Nach zweistündigem Rühren bei Raumtemperatur ist die Kupplung beendet. Das Reaktionsgemisch wird auf eine Temperatur von 40°C erwärmt und mit 150 Teilen Natriumchlorid versetzt, worauf sich ein Niederschlag bildet. Dieser wird abgesaugt, mit 10%-iger Natriumchloridlösung nachgewaschen und bei einer Temperatur von 60°C getrocknet. Man erhält 42 Teile eines Bisazofarbstoffes in Form eines dunkelorangefarbenen Pulvers.

5 Teile des wie oben angegeben erhältlichen Bisazofarbstoffes werden in 50 Teilen Wasser bei einem pH-Wert von 11 gelöst. Anschliessend wird die Lösung auf eine Temperatur von 50 bis 55°C erwärmt und es werden innerhalb von 10 Minuten 3 Teile Dimethylsulfat zugetropft, wobei der pH durch Zugabe von Natriumhydroxid bei einem Wert von 11 gehalten wird. Es wird drei Stunden bei einer Temperatur von 50 bis 55°C nachgerührt, anschliessend auf eine Temperatur von 0°C abgekühlt, mit 5 Teilen Natriumchlorid versetzt, der Niederschlag abgesaugt, mit 20%-iger Natriumchloridlösung nachgewaschen und getrocknet. Man erhält einen Farbstoff, der in Form der freien Säure der Verbindung der Formel 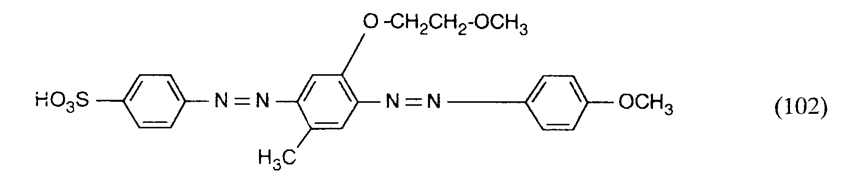 entspricht. Der Farbstoff der Formel (102) färbt natürliches und synthetisches Polyamidfasermaterial in orangen Farbtönen.

### Beispiele 43 bis 84: Analog zu den Angaben in Beispiel 42 können die in Form der freien Säure angegebenen Farbstoffe der Formel

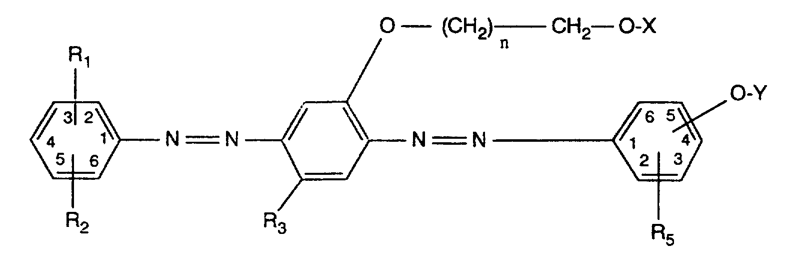

erhalten werden, worin R₁, R₂, R₃, R₅, -O-Y, X und n die in der folgenden Tabelle 2 angegebenen Bedeutungen haben. Die in Tabelle 2 angegebenen Farbstoffe färben natürliches und synthetisches Polyamidfasermaterial in gelben bis orangen Farbtönen.

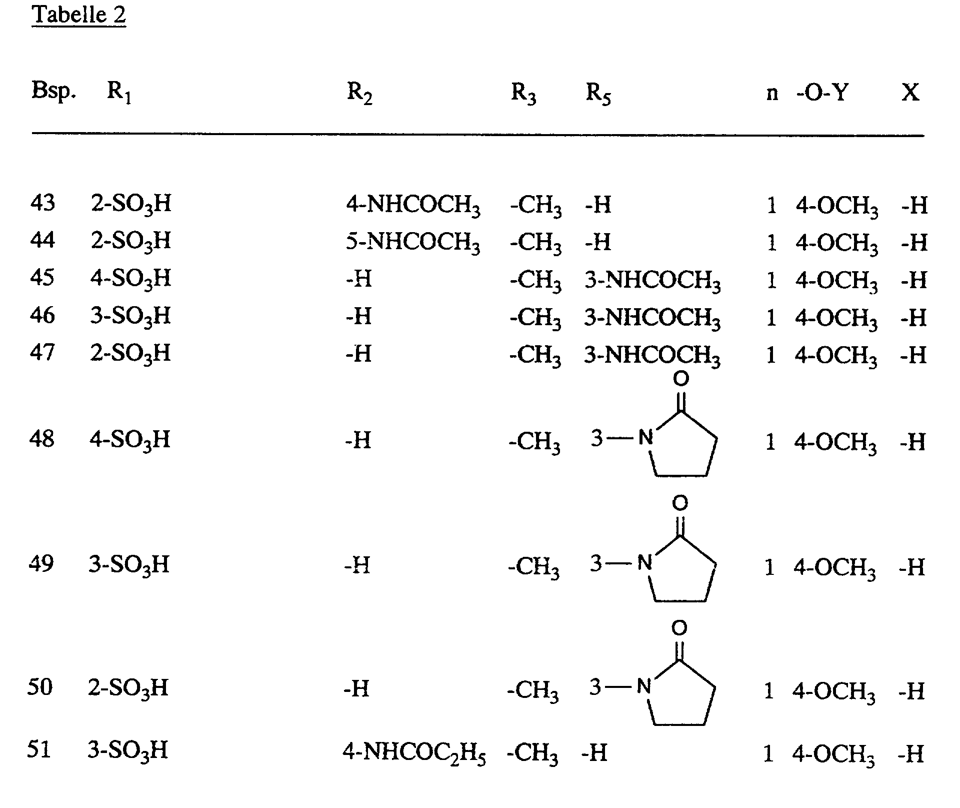

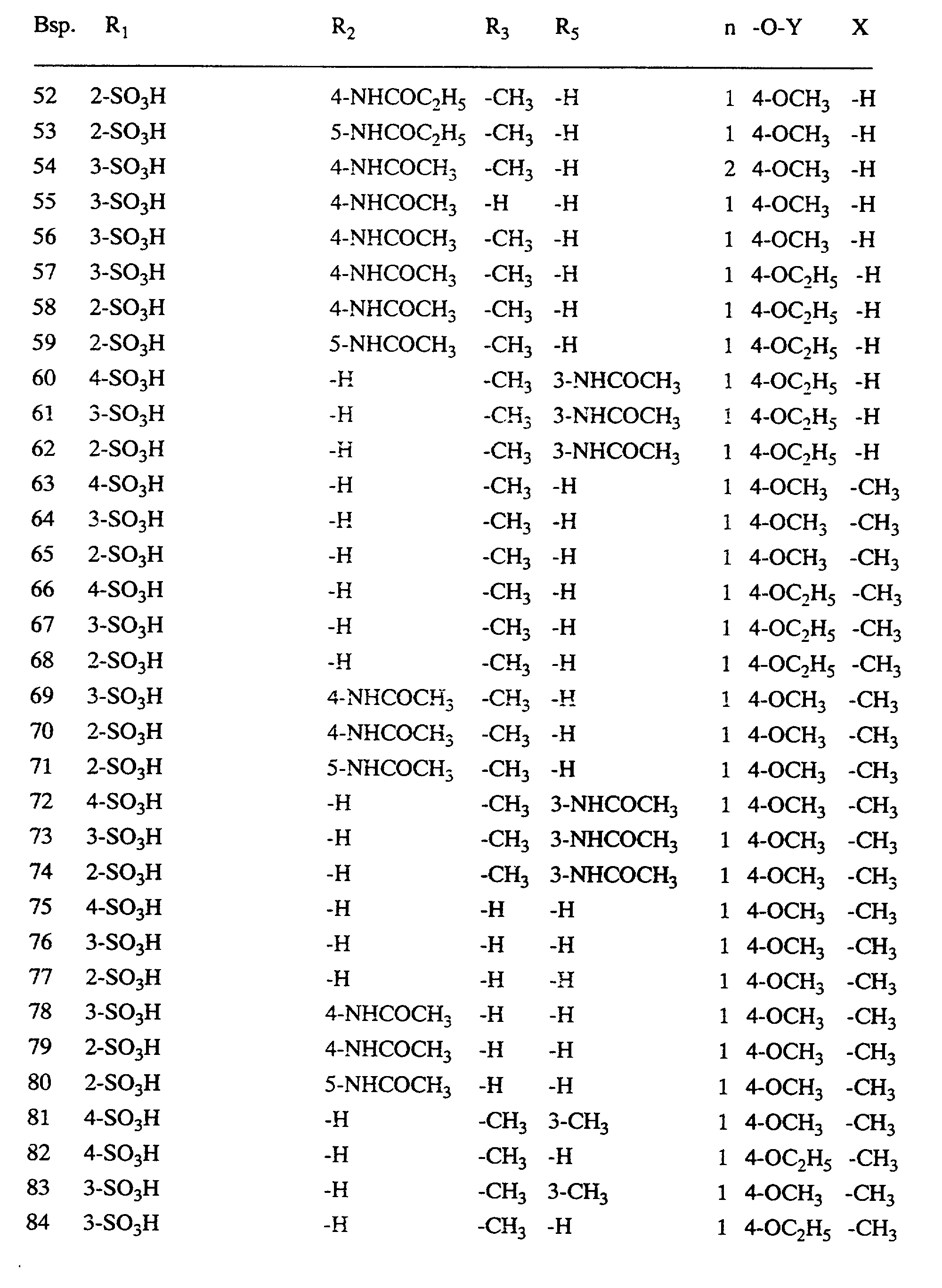

### Färbevorschrift I

Man färbt 10 Teile Polyamid-6,6-Gewebe in 500 Teilen einer wässrigen Flotte, die 2 g/l Ammonacetat enthält und mit Essigsäure auf pH 5 gestellt wird. Der Anteil des Farbstoffs gemäss Beispiel 1 beträgt 0,7 % bezogen auf das Fasergewicht. Die Färbedauer bei einer Temperatur von 98° beträgt 30 bis 90 Minuten. Das gefärbte Polyamid-6,6-Gewebe wird anschliessend herausgenommen und wie üblich gewaschen und getrocknet.

Man erhält ein orange gefärbtes Polyamid-6,6-Gewebe, das eine reine Nuance und gute Gesamtechtheiten aufweist.

### Färbevorschrift II

Man färbt 10 Teile Polyamid-6,6-Gewebe in 500 Teilen einer wässrigen Flotte, die 1 g/l Mononatriumphosphat enthält und mit Dinatriumphosphat auf pH 6 gestellt wird. Der Anteil des Farbstoffes gemäss Beispiel 1 beträgt 1 %, bezogen auf das Fasergewicht. Die Färbedauer bei einer Temperatur von 98° beträgt 30 bis 90 Minuten. Das gefärbte Polyamid-6,6-Gewebe wird anschliessend herausgenommen und wie übiich gewaschen und getrocknet.

Man erhält ein orange gefärbtes Polyamid-6,6-Gewebe, das eine reine Nuance und gute Gesamtechtheiten aufweist.

### Färbevorschrift III

Man färbt 10 Teile Wollstück in 500 Teiien einer wässrigen Flotte. Bezogen auf das Fasergewicht betragen die Anteile an Farbstoff U,45 % gemäss Beispiel 1, an Glaubersaiz kalz. 5 % und 80%-iger Essigsäure 2 %. Die Färbedauer bei einer Temperatur von 98° beträgt 30-60 Minuten. Das orange gefärbte, wie üblich gewaschene und getrocknete Wollstück weist sehr gute Allgemeinechtheiten auf.

### Druckbeispiel (Stoffdruck)

Gewebtes Polyamid 6 oder Polyamid 6.6-Material wird auf einer herkömmlichen Textildruckmaschine mit einer Paste bedruckt, die bezogen auf 1000 g Druckpaste enthält:
a) 20 g des Farbstoffes gemäss Beispiel 1,
b) 50 g Harnstoff,
c) 50 g Thiodiäthylenglykol,
d) 320 g Wasser,
e) 500 g Kernmehl- oder Guarmehlderivat, 10%-ig und
f) 60 g Ammontartrat-Lösung 15 Bè.

Die bedruckte Ware wird im Trockenschrank bei 70 bis 80° getrocknet und dann 20 bis 30 Minuten mit Sattdampf von 101 bis 103° gedämpft. Anschliessend wird die Ware 10 Minuten kalt gespült, 15 Minuten bei 50 bis 60° mit 2 g/l eines synthetischen Waschmittels gewaschen, erneut kalt gespült und dann getrocknet. Man erhält einen gleichmässigen Druck in oranger Nuance, mit scharfen Konturen und guten Echtheiten.

## Patentansprüche

1. Azofarbstoffe der Formel 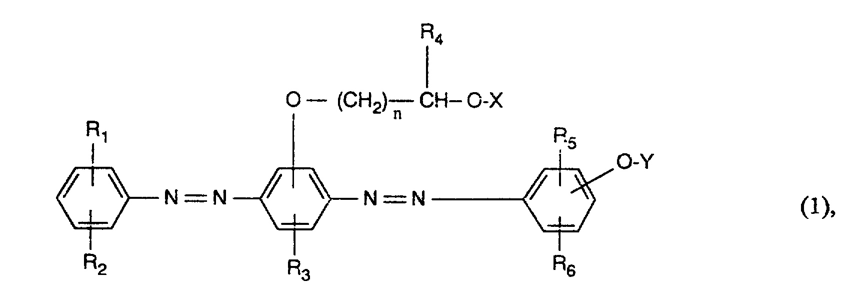 worin
R₁ Sulfo ist,
R₂ und R₅ unabhängig voneinander Wasserstoff, C₁-C₄-Alkyl, C₁-C₄-Alkoxy, Halogen, C₂-C₄-Alkanoylamino oder ein Rest der Formel 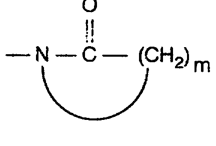 sind,
m die Zahl 3, 4 oder 5 ist,
R₃ und R₆ Wasserstoff, C₁-C₄-Alkyl, C₁-C₄-Alkoxy, C₂-C₄-Alkanoylamino oder Halogen R₄ Wasserstoff oder C₁-C₄-Alkyl,
X Wasserstoff, C₁-C₄-Alkyl oder C₂-C₄-Hydroxyalkyl,
Y C₁-C₈-Alkyl, im Alkyltei! durch die Gruppe -O-, 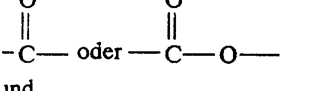 unterbrochenes C₂-C₈-Alkyl, oder C₃-C₈-Alkenyl ist und
n die Zahl 1, 2, 3 oder 4 ist;
mit der Massgabe, dass im Azofarbstoff der Formel (1) mindestens einer der Substituenten R₂, R₅ und R₆ C₂-C₄-Alkanoylamino oder ein Rest der Formel 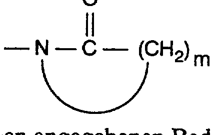 ist, wobei
m die oben angegebenen Bedeutungen hat; oder
X C₁-C₄-Alkyl oder C₂-C₄-Hydroxyalkyl ist; oder
Y im Alkylteil durch die Gruppe -O-, 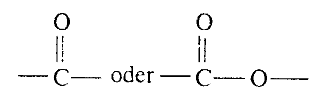 unterbrochenes C₂-C₈-Alkyl, oder C₃-C₈-Alkenyl ist.

2. Azofarbstoffe gemäss Anspruch 1, dadurch gekennzeichnet, dass R₂ und R₅ unabhängig voneinander Wasserstoff, C₁-C₄-Alkyl, C₁-C₄-Alkoxy, Halogen, C₂-C₄-Alkanoylamino oder ein Rest der Formel 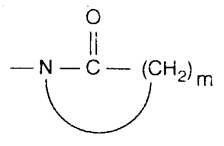 sind, m die Zahl 3, 4 oder 5 ist und R₆ Wasserstoff bedeutet.

3. Azofarbstoffe gemäss einem der Ansprüche 1 und 2, dadurch gekennzeichnet, dass R₃ Wasserstoff oder C₁-C₄-Alkyl ist.

4. Azofarbstoffe gemäss einem der Ansprüche 1 bis 3, dadurch gekennzeichnet, dass R₄ Wasserstoff ist.

5. Azofarbstoffe gemäss Anspruch 1, dadurch gekennzeichnet, dass R₂ und R₅ unabhängig voneinander Wasserstoff, C₁-C₄-Alkyl, C₁-C₄-Alkoxy, Halogen, C₂-C₄-Alkanoylamino oder ein Rest der Formel 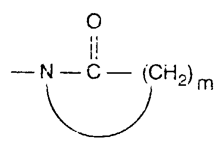 sind, m die Zahl 3, 4 oder 5, R₃ Wasserstoff oder C₁-C₄-Alkyl ist, R₄ und R₆ jeweils Wasserstoff bedeuten und X, Y und n die in Anspruch 1 angegebenen Bedeutungen haben;
mit der Massgabe, dass im Azofarbstoff der Formel (1)
mindestens einer der Substituenten R₂ und R₅ C₂-C₄-Alkanoylamino oder ein Rest der Formel 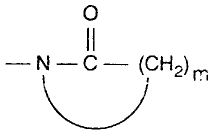 ist, wobei
m die oben angegebenen Bedeutungen hat; oder
X C₁-C₄-Alkyl oder C₂-C₄-Hydroxyalkyl ist; oder
Y im Alkylteil durch die Gruppe -O-, 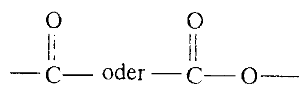 unterbrochenes C₂-C₈-Alkyl, oder C₃-C₈-Alkenyl ist.

6. Azofarbstoffe gemäss einem der Ansprüche 1 bis 5, dadurch gekennzeichnet, dass n die Zahl 2, 3 oder 4 ist.

7. Azofarbstoffe gemäss einem der Ansprüche 1 bis 5. dadurch gekennzeichnet, dass X C₁-C₄-Alkyl ist.

8. Azofarbstoffe gemäss einem der Ansprüche 1 bis 5, dadurch gekennzeichnet, dass Y C₃-C₈-Alkyl, im Alkylteil durch die Gruppe -O-, 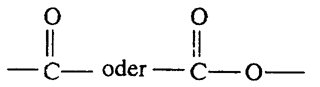 unterbrochenes C₂-C₅-Alkyl, oder C₃-C₈-Alkenyl ist.

9. Azofarbstoffe gemäss Anspruch 8, dadurch gekennzeichnet, dass Y im Alkylteil durch die Gruppe -O-, 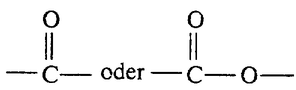 unterbrochenes C₃-C₈-Alkyl, oder C₃-C₈-Alkenyl ist.

10. Azofarbstoffe gemäss einem der Ansprüche 8 und 9, dadurch gekennzeichnet, dass Y C₃-C₈-Alkenyl ist.

11. Azofarbstoffe gemäss einem der Ansprüche 1 bis 5, dadurch gekennzeichnet, dass einer der Reste R₂ und R₅ C₂-C₄-Alkanoylamino oder ein Rest der Formel 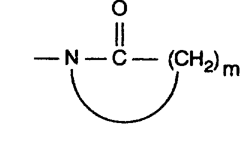 ist, wobei m die Zahl 3, 4 oder 5 bedeutet.

12. Azofarbstoffe gemäss Anspruch 11 der Formel 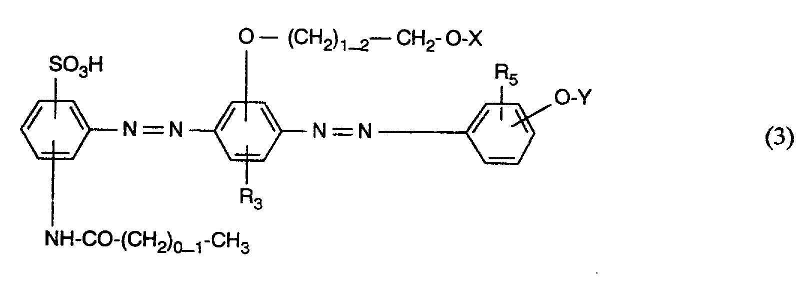 oder 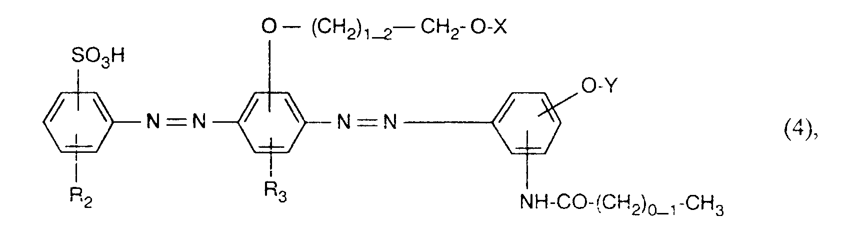 worin R₃ Wasserstoff oder C₁-C₄-Alkyl ist, R₂ und R₅ Wasserstoff, C₁-C₄-Alkyl, C₁-C₄-Alkoxy, Halogen oder ein Rest der Formel -NH-CO-(CH₂)₀₋₁-CH₃ sind und X und Y die in Anspruch 1 angegebenen Bedeutungen haben.

13. Verfahren zur Herstellung von Azofarbstoffen gemäss Anspruch 1, dadurch gekennzeichnet, dass man ein Amin der Formel 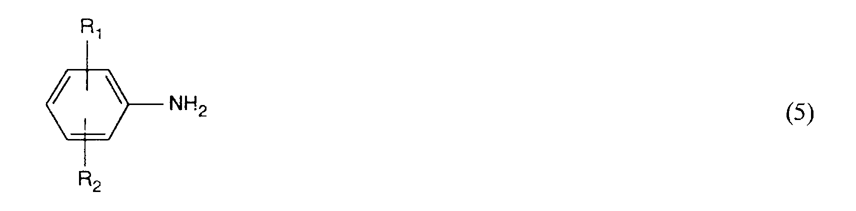 diazotiert, auf eine Kupplungskomponente der Formel 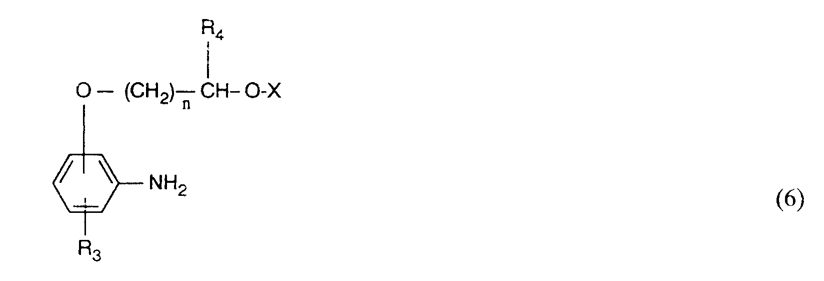 kuppelt, das Reaktionsprodukt der Formel 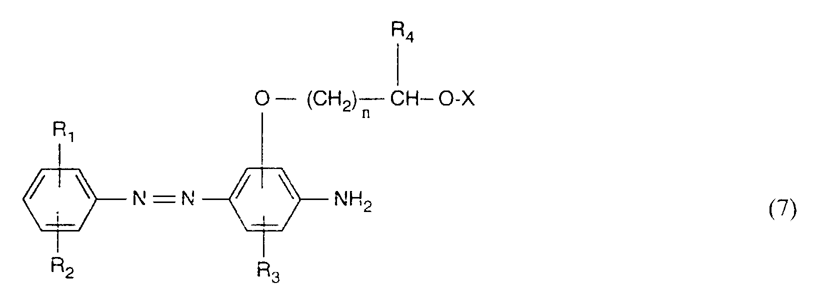 diazotiert und auf eine Kupplungskomponente der Formel 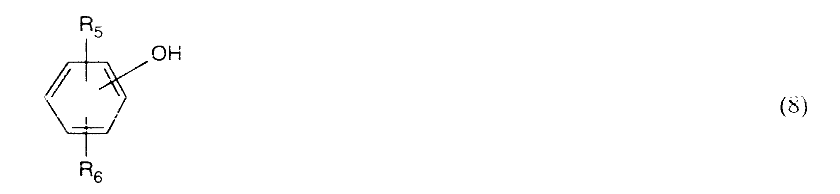 kuppelt, oder eine Verbindung der Formel (7) diazotiert und auf eine Verbindung der Formel (8) kuppelt und anschliessend den erhaltenen Farbstoff mit einer den Rest -Y einführenden Verbindung umsetzt, wobei R₁, R₂, R₃, R₄, R₅, R₆, X, Y und n die in Anspruch 1 angegebenen Bedeutungen haben.

14. Verwendung der Azofarbstoffe gemäss den Ansprüchen 1 bis 12 bzw. der gemäss Anspruch 13 erhaltenen Azofarbstoffe zum Färben oder Bedrucken von stickstoffhaltigen oder hydroxygruppenhaltigen Fasermaterialien.

15. Verwendung gemäss Anspruch 14 zum Färben oder Bedrucken von natürlichen oder synthetischen Polyamidfasermaterialien.

## Claims

1. An azo dye of formula 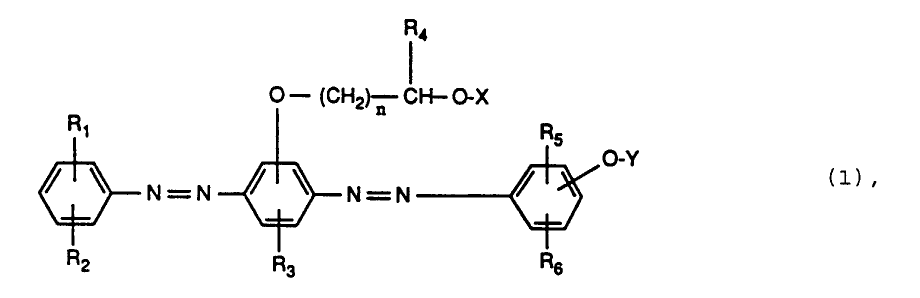 wherein
R₁ is sulfo, R₂ and R₅ are each independently of the other hydrogen, C₁-C₄alkyl, C₁-C₄alkoxy, halogen, C₂-C₄alkanoylamino or a radical of formula 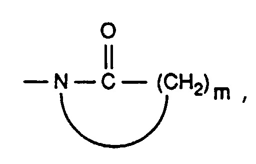
m is 3, 4 or 5,
R₃ and R₆ are hydrogen, C₁-C₄alkyl, C₁-C₄alkoxy, C₂-C₄alkanoylamino or halogen,
R₄ is hydrogen or C₁-C₄alkyl,
X is hydrogen, C₁-C₄alkyl or C₂-C₄hydroxyalkyl,
Y is C₁-C₈alkyl, C₂-C₈alkyl which is interrupted in the alkyl moiety by the group -O-, 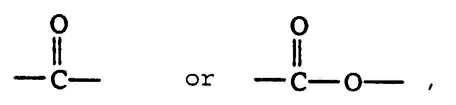
or is C₃-C₈alkenyl, and
n is 1, 2, 3 or 4; with the proviso that, in the azo dye of formula (1), at least one of the substituents R₂, R₅ and R₆ is C₂-C₄alkanoylamino or a radical of formula 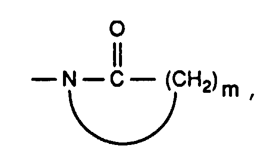 where
m is as defined above; or
X is C₁-C₄alkyl or C₂-C₄hydroxyalkyl; or
Y is C₂-C₈alkyl which is interrupted in the alkyl moiety by the group -O-, 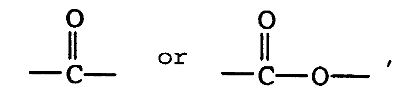 or is C₃-C₈alkenyl.

2. An azo dye according to claim 1, wherein R₂ and R₅ are each independently of the other hydrogen, C₁-C₄alkyl, C₁-C₄alkoxy, halogen C₂-C₄alkanoylamino or a radical of formula 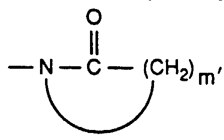 m is 3, 4 or 5, and R₆ is hydrogen.

3. An azo dye according to one of claims 1 and 2, wherein R₃ is hydrogen or C₁-C₄alkyl.

4. An azo dye according to one of claims 1 to 3, wherein R₄ is hydrogen.

5. An azo dye according to claim 1, wherein R₂ and R₅ are each independently of the other hydrogen, C₁-C₄alkyl, C₁-C₄alkoxy, halogen, C₂-C₄alkanoylamino or a radical of formula 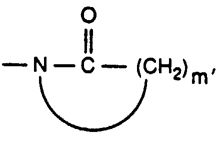 m is 3, 4 or 5, R₃ is hydrogen or C₁-C₄alkyl, R₄ and R₆ are each hydrogen, and X, Y and n are as defined in claim 1;
with the proviso that, in the azo dye of formula (1), at least one of R₂ and R₅ is C₂-C₄alkanoylamino or a radical of formula 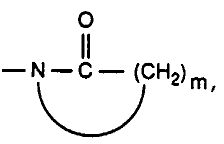 where
m is as defined above; or
X is C₁-C₄alkyl or C₂-C₄hydroxyalkyl; or
Y is C₂-C₈alkyl which is interrupted in the alkyl moiety by the group -O-, 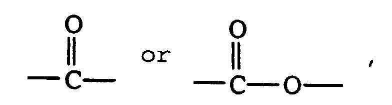 or is C₃-C₈alkenyl.

6. An azo dye according to one of claims 1 to 5, wherein n is 2, 3 or 4.

7. An azo dye according to one of claims 1 to 5, wherein X is C₁-C₄alkyl.

8. An azo dye according to one of claims 1 to 5, wherein Y is C₃-C₈alkyl, C₂-C₈alkyl which is interrupted in the alkyl moiety by the group -O-, 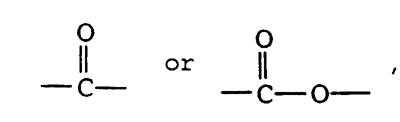 or is C₃-C₈alkenyl.

9. An azo dye according to claim 8, wherein Y is C₂-C₈alkyl which is interrupted in the alkyl moiety by the group -O-, 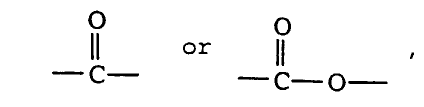 or is C₃-C₈alkenyl.

10. An azo dye according to one of claims 8 and 9, wherein Y is C₃-C₈alkenyl.

11. An azo dye according to one of claims 1 to 5, wherein one of R₂ and R₅ is C₂-C₄alkanoylamino or a radical of formula 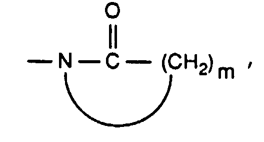 where m is 3, 4 or 5.

12. An azo dye according to claim 11 of formula 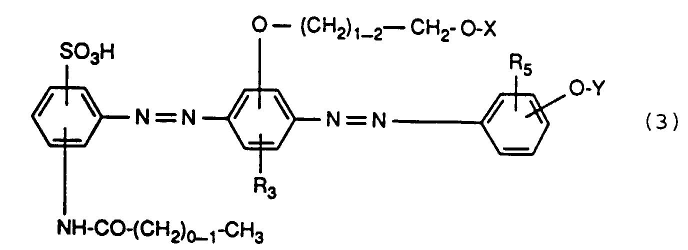 or 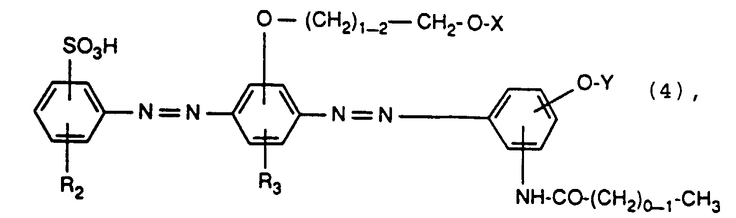 wherein R₃ is hydrogen or C₁-C₄alkyl, R₂ and R₅ are hydrogen, C₁-C₄alkyl, C₁-C₄alkoxy, halogen or a radical of formula -NH-CO-(CH₂)₀₋₁-CH₃, and X and Y are as defined in claim 1.

13. A process for the preparation of an azo dye according to claim 1, which comprises diazotising an amine of formula 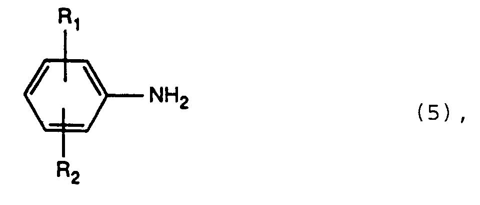 coupling the diazotised amine to a coupling component of formula 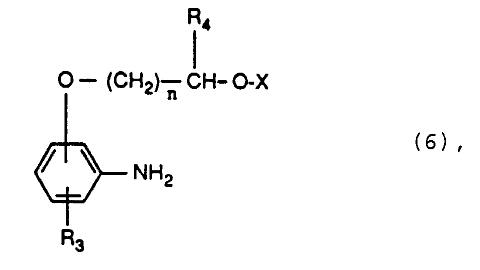 diazotising the reaction product of formula 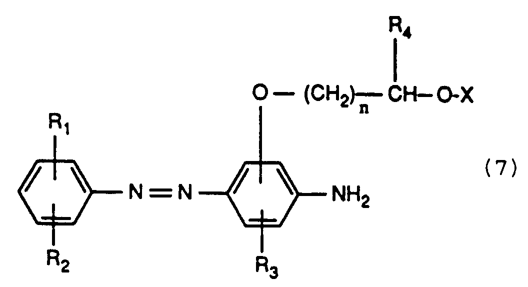 and then coupling that product to a coupling component of formula 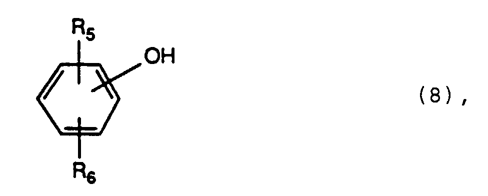 or diazotising a compound of formula (7) and coupling the reaction product to a compound of formula (8), then reacting the resultant dye with a compound that introduces the radical -Y, where R₁, R₂, R₃, R₄, R₅, R₆, X, Y and n are as defined in claim 1.

14. The use of an azo dye as claimed in claims 1 to 12 or obtained according to claim 13 for dyeing or printing nitrogen-containing or hydroxyl-containing fibre materials.

15. The use according to claim 14 for dyeing or printing natural or synthetic polyamide fibre materials.

## Revendications

1. Colorants azoïques de formule 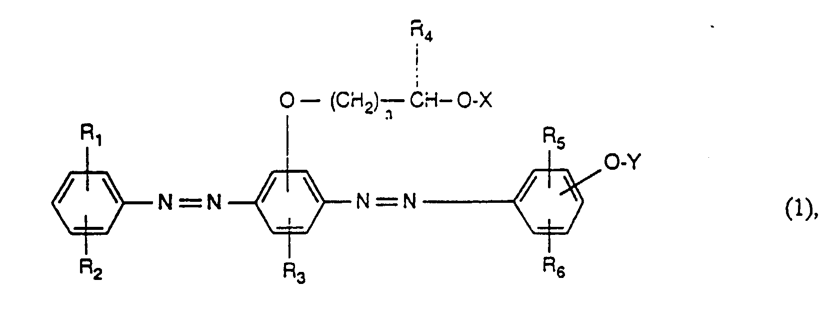 dans laquelle
R₁ est un groupe sulfo,
R₂ et R₅ sont indépendamment l'un de l'autre un atome d'hydrogène, un groupe alkyle en C₁-C₄, alcoxy en C₁-C₄, un atome d'halogène,
un groupe alcanoylamino en C₂-C₄ ou un groupe de formule 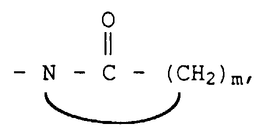 dans laquelle
m est le nombre 3, 4 ou 5,
R₃ et R₆ représentent un atome d'hydrogène, un groupe alkyle en C₁-C₄, alcoxy en C₁-C₄, un groupe alcanoylamino en C₂-C₄ ou un atome d'halogène,
R₄ représente un atome d'hydrogène ou un groupe alkyle en C₁-C₄,
X représente un atome d'hydrogène, un groupe alkyle en C₁-C₄ ou hydroxyalkyle en C₂-C₄,
X représente un groupe alkyle en C₁-C₈, alkyle en C₂-C₈ interrompu dans la partie alkyle par le groupe -O-, 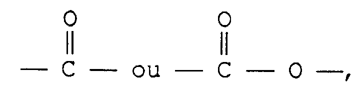 ou alcényle en C₃-C₈ et
n est le nombre 1, 2, 3 ou 4;
à la condition que dans le colorant azoïque de formule (1)
au moins un des substituants R₂, R₅ et R₆ soit un groupe alcanoylamino en C₂-C₄ ou un groupe de formule 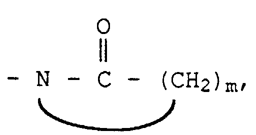 dans laquelle
m a les significations indiquées ci-dessus; ou
X est un groupe alkyle en C₁-C₄ ou hydroxyalkyle en C₂-C₄; ou
Y représente un groupe alkyle en C₂-C₈ interrompu dans la partie alkyle par le groupe -O-, 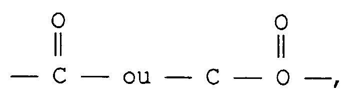 ou alcényle en C₃-C₈.

2. Colorants azoïques selon la revendication 1, caractérisés en ce que R₂ et R₅ représentent indépendamment l'un de l'autre un atome d'hydrogène, un groupe alkyle en C₁-C₄, alcoxy en C₁-C₄, un atome d'halogène, un groupe alcanoylamino en C₁-C₄ ou un groupe de formule 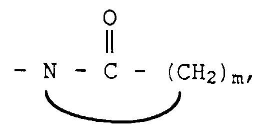 m représente les nombres 3, 4 ou 5 et R₆ représente un atome d'hydrogène.

3. Colorants azoïques selon l'une des revendications 1 et 2, caractérisés en ce que R₃ est un atome d'hydrogène ou un groupe alkyle en C₁-C₄.

4. Colorants azoïques selon l'une des revendications 1 à 3, caractérisés en ce que R₄ est un atome d'hydrogène.

5. Colorants azoïques selon la revendication 1, caractérisés en ce que R₂ et R₅ sont indépendamment l'un de l'autre un atome d'hydrogène, un groupe alkyle en C₁-C₄, alcoxy en C₁-C₄, un atome d'halogène, un groupe alcanoylamino ou un groupe de formule 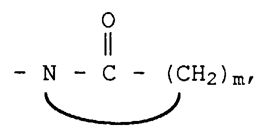 m représente les nombres 3, 4 ou 5, R₃ est un atome d'hydrogène ou un groupe alkyle en C₁-C₄, R₄ et R₆ représentent respectivement un atome d'hydrogène et X, Y et n ont les significations indiquées à la revendication 1;
à la condition qu'au moins un des substituants R₂ et R₅ soit un groupe alcanoylamino en C₂-C₄ ou un groupe de formule 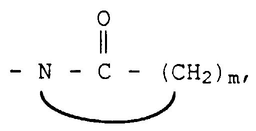 dans laquelle
m a les significations indiquées ci-dessus; ou
X est un groupe alkyle en C₁-C₄ ou hydroxyalkyle en C₂-C₄; ou
Y représente un groupe alkyle en C₂-C₈ interrompu dans la partie alkyle par le groupe -O-, 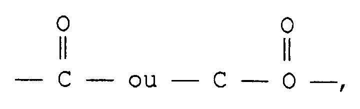 ou alcényle en C₃-C₈.

6. Colorants azoïques selon une des revendications 1 à 5, caractérisés en ce que n est le nombre 2, 3 ou 4.

7. Colorants azoïques selon une des revendications 1 à 5, caractérisés en ce que X est un groupe alkyle en C₁-C₄.

8. Colorants azoïques selon une des revendications 1 à 5, caractérisés en ce que Y est un groupe alkyle en C₁-C₈, alkyle en C₂-C₈ interrompu dans la partie alkyle par le groupe -O-, 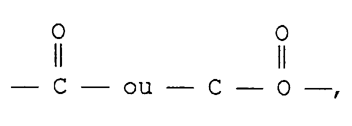 ou alcényle en C₃-C₈.

9. Colorants azoïques selon la revendication 8, caractérisés en ce que Y est un groupe alkyle en C₂-C₈ interrompu dans la partie alkyle par le groupe -O-, 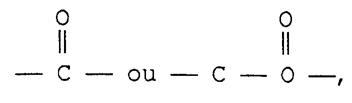 ou alcényle en C₃-C₈.

10. Colorants azoïques selon une des revendications 8 ou 9, caractérisés en ce que Y est un groupe alcényle en C₃-C₈.

11. Colorants azoïques selon une des revendications 1 à 5, caractérisés en ce que l'un des groupes R₂ et R₅ représente un groupe alcanoylamino en C₂-C₄ ou un groupe de formule 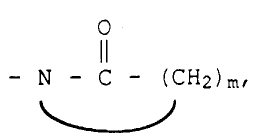 dans laquelle m représente le nombre 3, 4 ou 5.

12. Colorants selon la revendication 11 de formules 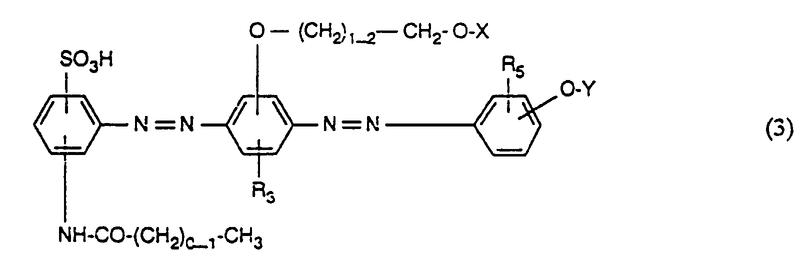 ou 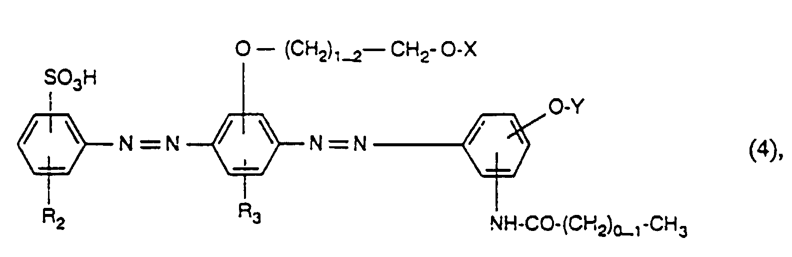 dans lesquelles R₃ représente un atome d'hydrogène ou un groupe alkyle en C₁-C₄, R₂ et R₅ un atome d'hydrogène, un groupe alkyle en C₁-C₄, alcoxy en C₁-C₄, un atome d'halogène ou un groupe de formule -NH-CO-(CH₂)₀₋₁-CH₃ et X et Y ont les significations indiquées à la revendication 1.

13. Procédé pour la préparation de colorants azoïques selon la revendication 1, caractérisé en ce qu'on réalise la diazotation d'une amine de formule 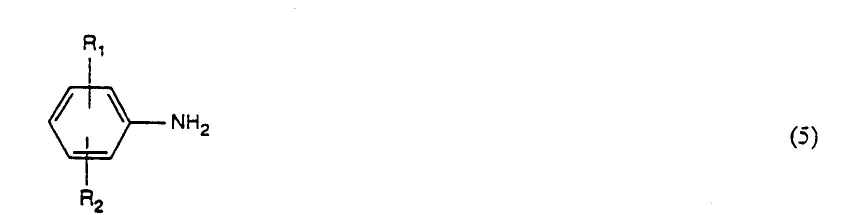 qu'on réalise une réaction de copulation sur un composant de couplage de formule 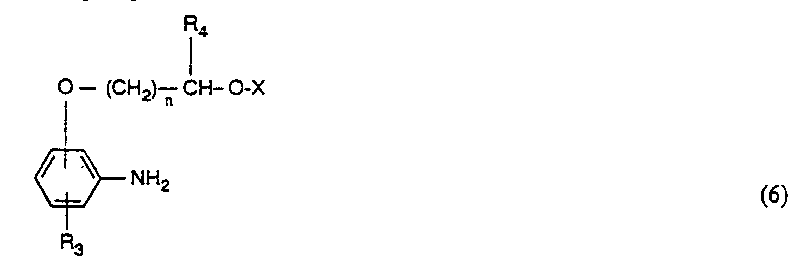 qu'on réalise la diazotation du produit de réaction de formule 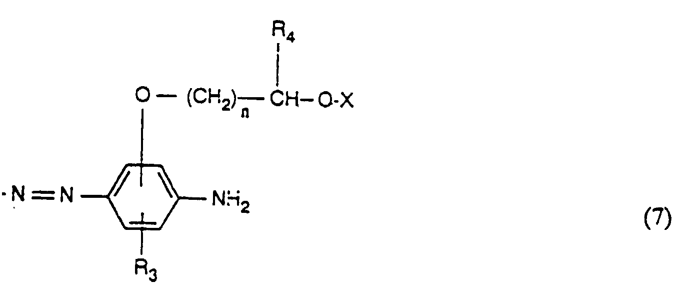 et en ce qu'on réalise la copulation sur un composé de couplage de formule 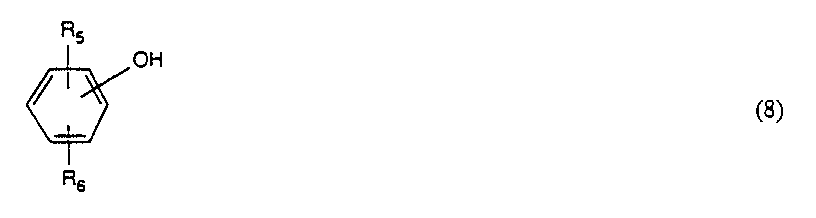 ou en ce qu'on réalise la diazotation d'un composé de formule (7) et la copulation sur un composé de formule (8) et on met ensuite à réagir le colorant obtenu avec un composé introduisant le groupe -Y, formules dans lesquelles R₁, R₂, R₃, R₄, R₅, R₆, X, Y et n ont les significations indiquées dans la revendication 1.

14. Utilisation des colorants azoïques selon les revendications 1 à 12 ou des colorants azoïques obtenus selon la revendication 13 pour la coloration ou l'impression de matériaux de fibres contenant de l'azote ou contenant des groupes hydroxy.

15. Utilisation selon la revendication 14 pour la coloration ou l'impression de fibres de polyamides naturels ou synthétiques.
